Europäisches Patentamt

European Patent Office

Office européen des brevets

(11) Veröffentlichungsnummer: **0 447 683 A2**

# (12) EUROPÄISCHE PATENTANMELDUNG

(21) Anmeldenummer: 90125815.2

(22) Anmeldetag: 29.12.90

(51) Int. Cl.5: **B05B 7/12**

(30) Priorität: 22.03.90 DE 4009168

(43) Veröffentlichungstag der Anmeldung:
25.09.91 Patentblatt 91/39

(84) Benannte Vertragsstaaten:
**AT BE CH DE DK ES FR GB GR IT LI LU NL SE**

(71) Anmelder: **Walther Spritz- und
Lackiersysteme GmbH
Kärntner Strasse 22-30
W-5600 Wuppertal 11(DE)**

(72) Erfinder: **Maurer, Günther
Potthoffstrasse 14
W-5830 Schwelm(DE)**
Erfinder: **Wiese, Winfried
Theodor-Mommsen Strasse 26
W-5650 Solingen(DE)**

(74) Vertreter: **Rieder, Hans-Joachim, Dr. et al
Corneliusstrasse 45
W-5600 Wuppertal 11(DE)**

(54) Seitliche Nadeldichtung.

(57) Die Erfindung betrifft eine Spritzpistole (1) zum Versprühen von Farbe oder dergleichen, mit einem Pistolenkörper (2) und einer Spritzdüse (3), wobei in dem Pistolenkörper (2) eine Düsennadel (3) gelagert ist, zum betätigbaren Verschluß der Spritzdüse (3) durch eine Düsennadelspitze (5), und weiter die Düsennadel (3) durch eine Dichtung (11) geführt ist und schlägt zur Erzielung eines erhöhten Gebrauchswertes vor, daß die Dichtung (11) im wesentlichen senkrecht zu der Mittelachse (12) der Düsennadel (3) in den Pistolenkörper (2) einsetzbar ist.

FIG. 1

EP 0 447 683 A2

Die Erfindung betrifft eine Spritzpistole zum Versprühen von Farbe oder dergleichen, mit einem Pistolenkörper und einer Spritzdüse, wobei in dem Pistolenkörper eine Düsennadel gelagert ist, zum betätigbaren Verschluß der Spritzdüse durch eine Düsennadelspitze und weiter die Düsennadel durch eine Dichtung geführt ist.

Eine derartige Spritzpistole ist in ihrem grundsätzlichen Aufbau beispielsweise aus dem deutschen Patent 1 858 891 bekannt. Weiter ist bezüglich eines Spritzdüsenkörpers in abgewandelter Ausführung auf die OS 25 54 475 zu verweisen. Diesen Ausführungsformen ist gemeinsam, daß die Düsenöffnung durch die Nadelspitze einer Düsennadel verschließbar ist. Die Düsennadel ist auch jeweils durch eine Dichtung hindurchgeführt. Hiermit wird die Mischkammer bzw. die Ansaugkammer für den Farbvorrat in der Pistole nach außen abgedichtet. Bei der bekannten Pistole ist die Dichtung der Düsennadel von einer hinteren Stirnfläche des Pistolenkörpers aus einzusetzen. Die Dichtung befindet sich hierbei im einzelnen bei der insgesamt umgekehrt U-förmigen Gestalt der bekannten Spritzpistole an der Innenseite des vorderen Schenkels der U-Form. Nach Herausnehmen der Düsennadel muß zum Demontieren und beispielsweise Erneuern der Dichtung zwischen den Griffbereich und dem vorderen Anschluß für den Farbvorrat gearbeitet werden. Diese Dichtung besteht aus einem Einschraubelement, das eine Durchgangsbohrung aufweist für die Düsennadel. Das Einschraubelement klemmt eine Dichtungpackung, die gleichfalls eine Durchgangsbohrung aufweist, gegen eine innere Wandung einer insgesamt zylindrischen Bohrung in dem Pistolenkörper.

Diese bekannte Spritzpistole ist noch nicht in jeder Hinsicht zufriedenstellend. Im Hinblick auf die Dichtung wird die Zuverlässigkeit der Dichtung und die Handhabbarkeit beim Wechseln der Dichtungen noch als verbesserungsbedürftig empfunden.

Ausgehend von dem vorbeschriebenen Stand der Technik stellt sich der Erfindung die Aufgabe, die bekannte Spritzpistole zum Versprühen von Farbe oder dergleichen so auszugestalten und weiterzubilden, daß ein höherer Gebrauchswert erzielt ist.

Diese Aufgabe ist bei der Spritzpistole gemäß dem Anspruch 1 gelöst, wobei darauf abgestellt ist, daß die Dichtung im wesentlichen senkrecht zu einer Mittelachse der Düsennadel in den Pistolenkörper einsetzbar und entsprechend wieder herausnehmbar ist. Die Dichtung kann bei der erfindungsgemäßen Spritzpistole also seitlich entnommen werden - natürlich nachdem die Düsennadel zuvor wie bei der bekannten Spritzpistole auch herausgenommen worden ist. In der Handhabung führt dies zu einer wesentlichen Erleichterung. Die Dichtung kann auch bei auf der Seite liegender Pistole entnommen werden. Es ist nicht erforderlich, die Spritzpistole insgesamt beim Dichtungswechsel in der Hand zu halten. Dies gilt jedenfalls so lange, wie keine Dichtungspackung verwendet wird, die geschlitzt ist oder in sonstiger Weise auch ein seitliches Übergreifen der - eingesetzten - Düsennadel ermöglicht. Gewöhnlich wird eine kreisringförmige Dichtungspackung eingesetzt. In weiterer Ausgestaltung ist vorgesehen, daß die Dichtung im Einbauzustand in Längsrichtung der Düsennadel beidseitig im Pistolenkörper abgestützt ist. Es ist weiter in dem Pistolenkörper eine seitliche, d. h. in einer Querrichtung zu einer Erstreckung der Düsennadel offene Aufnahmekammer für die Dichtung ausgebildet. Die Aufnahmekammer kann im wesentlichen senkrecht zu einer durch einen Griff und den Pistolenkörper etwa mittig durchsetzenden Ebene geöffnet sein. Dies bedeutet, wie auch schon weiter oben grundsätzlich angedeutet, daß die Aufnahmekammer seitlich, zu einer Seite, geöffnet ist. Die Dichtung ist in Nachbarschaft zu der Düse, im wesentlichen vor einem Betätigungshebel angeordnet. Der Betätigungshebel ist gewöhnlich in einem oberen Bereich der Spritzpistole drehbeweglich gelagert. Im unbetätigten Zustand verläuft er von dem Drehpunkt nach unten und vorne, also schräg. Aufgrund dieser Schräglage und in Abhängigkeit von der Erstreckung des Betätigungshebels kann es in Draufsicht möglich sein, daß sich der Betätigungshebel auch teilweise im Bereich (unterhalb) der Dichtung erstreckt. Insofern ist formuliert worden, daß die Dichtung im wesentlichen vor dem Betätigungshebel angeordnet ist. Im einzelnen besteht die Dichtung aus zwei ineinander geführten, gegensinnig geöffneten Hülsen, einer Innenhülse und einer Außenhülse. In der Innenhülse ist die Dichtungspackung aufgenommen. Die Innenhülse und die Außenhülse sind federnd gegeneinander abgestützt. Die Innenhülse ist weiter bevorzugt mit einem äußeren Betätigungsfortsatz ausgebildet, der einen Längsschlitz der Außenhülse durchsetzt. Mittels dieses Betätigungsfortsatzes kann die Innenhülse gegen die Federkraft verschoben werden, so, daß sich die Gesamtlänge der Dichtung verringert und die Dichtung aus der Aufnahmekammer in dem Pistolenkörper entnommen werden kann. Hierzu ist bevorzugt weiter vorgesehen, daß die Innenhülse oder die Außenhülse in Längsrichtung einen äußeren Halterungsvorsprung ausbildet, zur Aufnahme in einer entsprechend in dem Pistolenkörper ausgebildeten Ausnehmung. Im eingesetzten Zustand ist die Dichtung also formschlüssig in dem Pistolenkörper aufgenommen, auch wenn die Düsennadel noch nicht eingesetzt ist.

Nachstehend ist die Erfindung desweiteren anhand der beigefügten Zeichnung, die jedoch lediglich ein Ausführungsbeispiel darstellt, erläutert.

Hierbei zeigt:

Fig. 1    einen Querschnitt durch einen oberen Bereich einer Spritzpistole;

Fig. 2    einen Querschnitt durch den Gegenstand gemäß Fig. 1, geschnitten entlang der Linie II-II;

Fig. 3    eine Seitenansicht der Spritzpistole;

Fig. 4    eine Ansicht von oben der Spritzpistole;

Fig. 5    einen Querschnitt durch die Dichtung in vergrößerter Einzeldarstellung bei herausgenommener Düsennadel;

Fig. 6    einen Querschnitt durch die Innenhülse entlang der Linie V-V in Fig. 4;

Fig. 7    eine Ansicht in Richtung des Pfeiles A in Fig. 4, in teilweiser Darstellung;

Fig. 8    einen Querschnitt durch die Außenhülse, entsprechend der Darstellung in Fig. 4; und

Fig. 9    eine Draufsicht auf die Außenhülse gemäß Fig. 7.

Dargestellt und beschrieben ist eine Spritzpistole 1 zum Versprühen von Farbe oder dergleichen. Die Spritzpistole 1 besitzt einen Pistolenkörper 2 und eine Spritzdüse 3. In dem Pistolenkörper 2 ist eine Düsennadel 30 gelagert. Mittels einer Düsennadelspitze 5 ist eine Öffnung 4 in der Spritzdüse 3 verschließbar. An einen Anschluß 6 ist ein Farbvorratsbehältnis, das im einzelnen nicht dargestellt ist, anschließbar. Durch einen weiteren Anschluß 7 im Spritzpistolengriff 8 wird Druckluft zugeführt. Durch einen erzeugten Unterdruck wird aus dem Farbvorratsbehältnis durch die Düsenkammer 9 Farbe zum Verspritzen ausgetragen, nachdem die Düsennadel 3 zurückgezogen ist und aufgrund des geöffneten Ventiles 10 die Druckluft entweichen kann.

Die Düsennadel 30 ist gegenüber der Düsenkammer 9 durch eine Dichtung 11 abgedichtet. Die Dichtung 11 ist im wesentlichen senkrecht zu einer Mittelachse 12 der Düsennadel 30 in den Pistolenkörper 2 einsetzbar bzw. herausnehmbar.

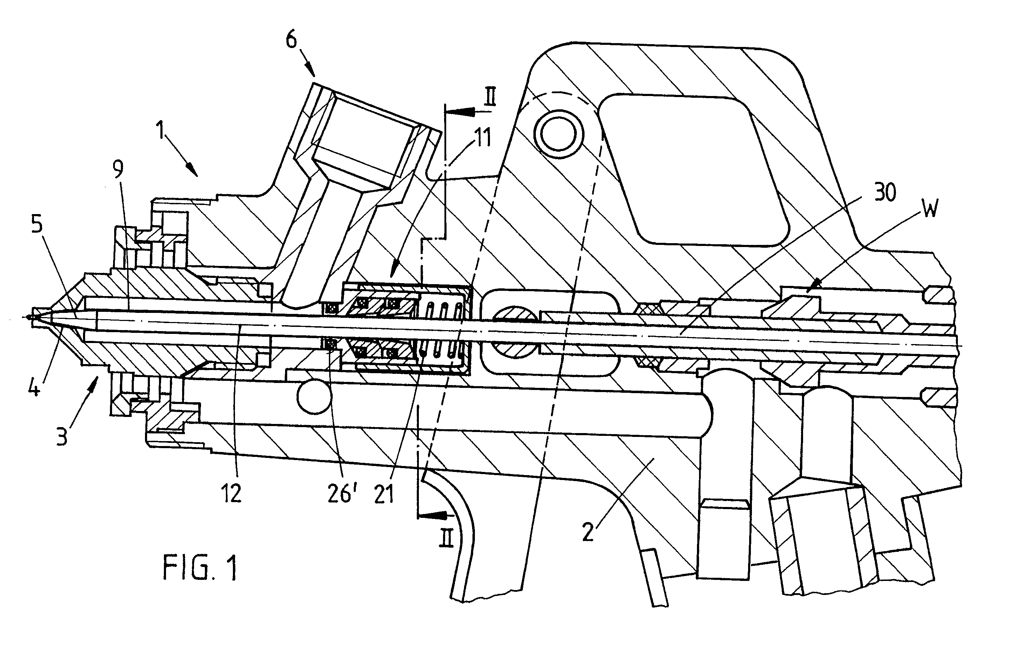

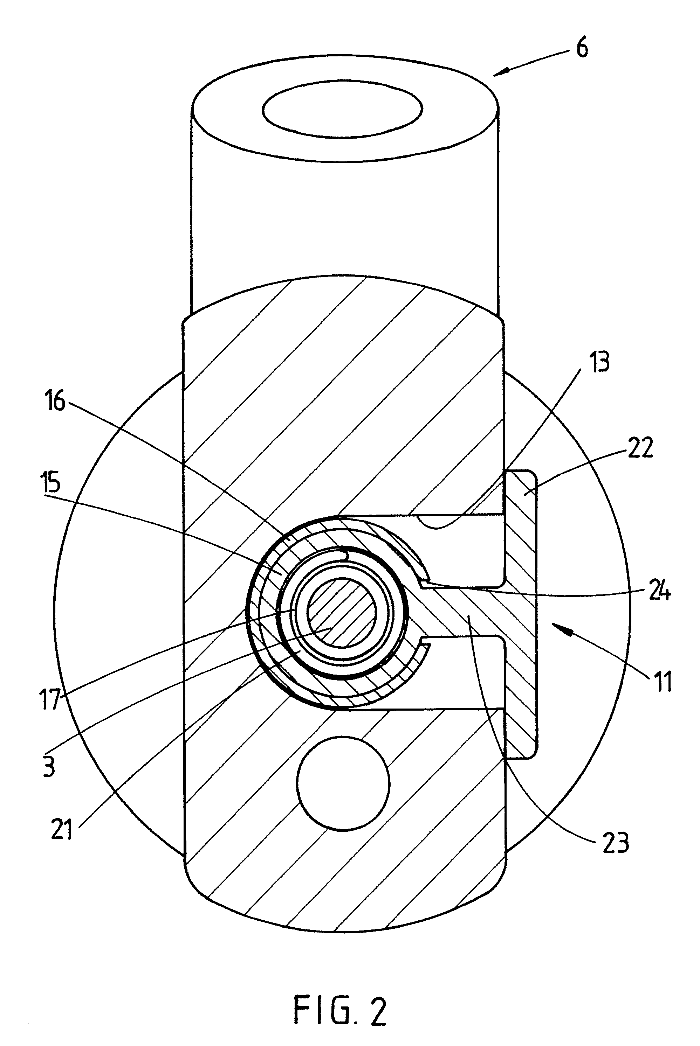

In der Darstellung gemäß Fig. 2 ist ein Querschnitt durch die Spritzpistole gemäß Fig. 1 entlang der Linie II-II dargestellt, bei herausgenommener Dichtung. Es ist die seitlich öffnende Dichtungskammer 13 zu erkennen.

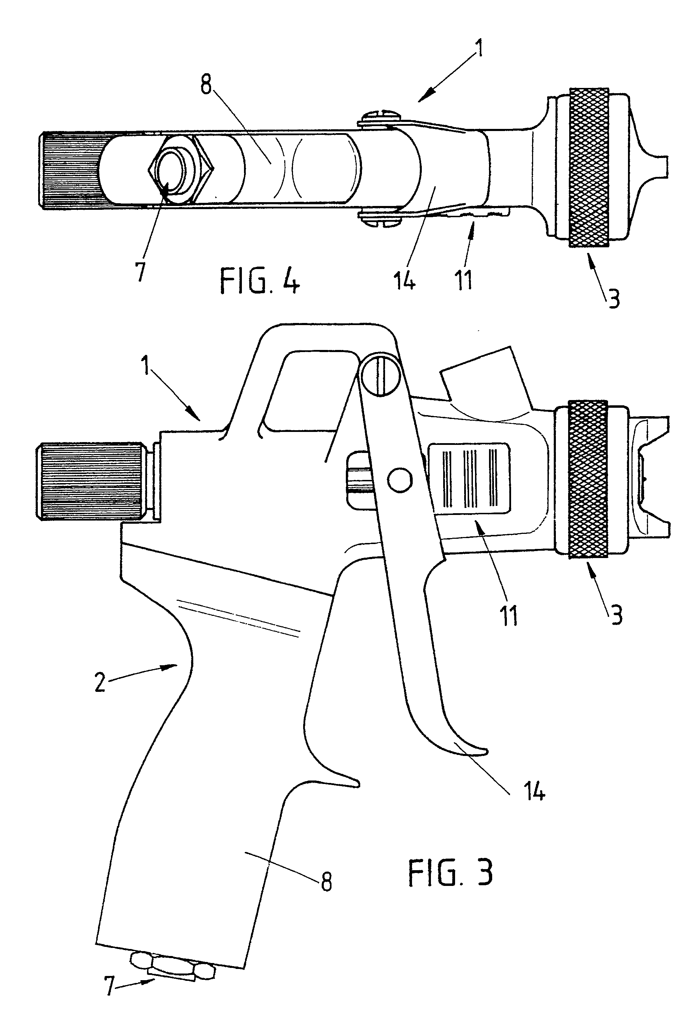

Wie weiter Fig. 1 und den Fig. 3 und 4 zu entnehmen ist, ist die Dichtung 11 im wesentlichen vor dem Betätigungshebel 14 angeordnet.

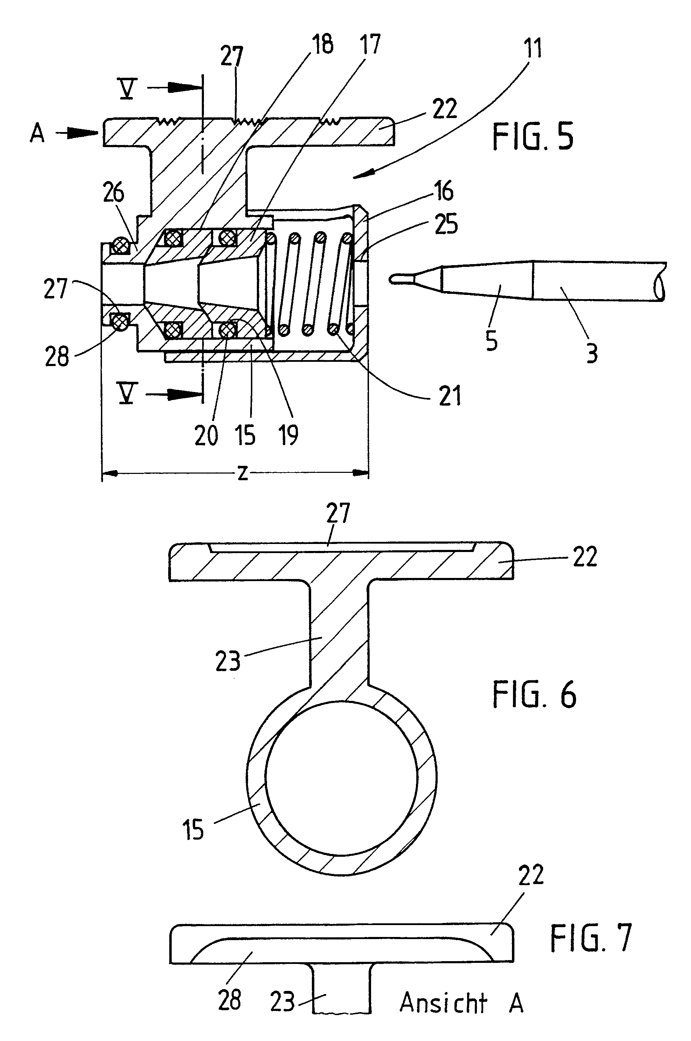

Im einzelnen besteht die Dichtung 11, mit Bezug zu den Fig. 5 bis 9, aus zwei ineinander geführten gegensinnig geöffneten Hülsen, nämlich einer Innenhülse 15 und einer Außenhülse 16. In der Innenhülse 15 ist eine Dichtungspackung aufgenommen, die aus zwei Dichtungspackungselementen 17, 18 besteht. Diese Dichtungspackungselemente 17, 18 sind innen konisch zulaufend ausgebildet. Äußerlich besitzen sie eine Abstufung 19, in welche jeweils ein Dichtungs-O-Ring 20 eingelegt ist. Der engste Durchmesser eines Dichtungspackungselementes 17 bzw. 18 ist enger gewählt als der Durchmesser der Düsennadel 3.

Die Innenhülse 15 ist gegen die Außenhülse 16 durch eine Feder 21 verspannt. Im entspannten Zustand, also nach Ausbau oder vor Einbau, ist die Gesamtlänge L der Dichtung 11 größer als die Länge der Dichtungskammer 13. Im eingebauten Zustand liegen die Außenhülse 16 und die Innenhülse 15 entsprechend jeweils mit Vorspannung an den Stirnflächen der Dichtungskammer 13 an.

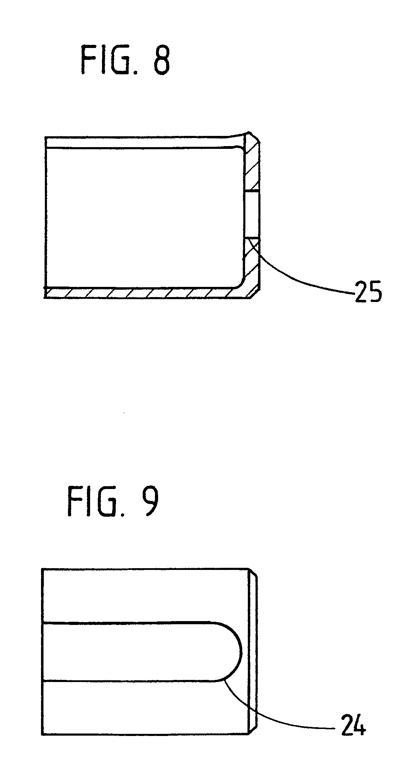

Die Innenhülse 15 besitzt weiter, mit Bezug insbesondere auch zu den Fig. 6 und 7, einen äußeren Betätigungsfortsatz 22. Der Betätigungsfortsatz 22 ist über einen Steg 23 mit der im Querschnitt im wesentliche kreisförmig ausgebildeten Innenhülse 15 verbunden. Der Steg 23 durchsetzt einen Schlitz 24 in der Außenhülse 16 (vgl. Fig. 9). Stirnflächig besitzt die Außenhülse 16 eine Durchgangsbohrung 25, um die Düsennadel 3 hindurchführen zu können.

Die Innenhülse 15 besitzt weiter einen äußeren Halterungsvorsprung 26, der in einer entsprechenden Aufnahme 26' (vgl. insbesondere Fig. 1) in dem Pistolenkörper 2 im Einbauzustand aufgenommen ist. Der Halterungsvorsprung ist mit einer radialen Nut 27 ausgebildet, in welcher ein weiterer Dichtungs-O-Ring 28 einliegt. Der Befestigungsfortsatz 22 ist oberseitig mit einer quer verlaufenden Riffelung 27 versehen, um sie geeignet betätigen zu können. Vorderseitig (vgl. Fig. 7) besitzt der Befestigungsfortsatz 22 unterseitig eine querverlaufende Auskehlung 31.

Im Einbauzustand wird die Dichtung 11 zunächst durch die sie durchsetzende Düsennadel 3 in dem Pistolenkörper 2 gehalten. Bei herausgenommener Düsennadel 3 ist darüber hinaus noch die Halterung durch den Halterungsvorsprung 26 wirksam. Mittels des Befestigungsfortsatzes 22 kann die Innenhülse 15 dann zur Herausnahme der Dichtung 11 nach hinten - in Fig. 5 auf die Durchgangsbohrung 25 hin der Außenhülse 16 - verschoben werden, bis der Halterungsvorsprung 26 aus der entsprechenden Aufnahme 26' herausgefahren ist. Sodann kann die Dichtung 11 insgesamt mittels des Befestigungsfortsatzes 22 seitlich aus der Dichtungskammer 13 in dem Pistolenkörper 2 entnommen werden.

Die in der vorstehenden Beschreibung, der Zeichnung und den Ansprüchen offenbarten Merkmale der Erfindung können sowohl einzeln als auch in beliebiger Kombination für die Verwirklichung der Erfindung von Bedeutung sein. Alle offenbarten Merkmale sind erfindungswesentlich. In die Offenbarung der Anmeldung wird hiermmit auch der Offenbarungsinhalt der zugehörigen/beigefügten Prioritätsunterlagen (Abschrift der Voranmeldung) vollinhaltlich mit einbezogen.

**Patentansprüche**

1. Spritzpistole (1) zum Versprühen von Farbe oder dergleichen, mit einem Pistolenkörper (2) und einer Spritzdüse (3), wobei in dem Pistolenkörper (2) eine Düsennadel (3) gelagert ist, zum betätigbaren Verschluß der Spritzdüse (3) durch eine Düsennadelspitze (5), und weiter die Düsennadel (3) durch eine Dichtung (11) geführt ist, dadurch gekennzeichnet, daß die Dichtung (11) im wesentlichen senkrecht zu einer Mittelachse (12) der Düsennadel (3) in den Pistolenkörper (2) einsetzbar ist.

2. Spritzpistole, insbesondere nach Anspruch 1, dadurch gekennzeichnet, daß die Dichtung (11) in Längsrichtung der Düsennadel (3) beidseitig im Pistolenkörper (2) abgestützt ist.

3. Spritzpistole, insbesondere nach einem oder mehreren der vorhergehenden Ansprüche, dadurch gekennzeichnet, daß in dem Pistolenkörper (2) eine in einer Querrichtung zu einer Erstreckung der Düsennadel (3) offene Dichtungskammer (13) für die Dichtung (11) ausgebildet ist.

4. Spritzpistole, insbesondere nach einem oder mehreren der vorhergehenden Ansprüche, dadurch gekennzeichnet, daß die Dichtungskammer (13) im wesentlichen senkrecht zu einer durch einen Betätigungshebel (14) und den Pistolenkörper (2) etwa mittig durchsetzenden Ebene geöffnet ist.

5. Spritzpistole, insbesondere nach einem oder mehreren der vorhergehenden Ansprüche, dadurch gekennzeichnet, daß die Dichtung (11) in Nachbarschaft zu der Düse (3) im wesentlichen vor dem Betätigungshebel (14) angeordnet ist.

6. Spritzpistole, insbesondere nach einem oder mehreren der vorhergehenden Ansprüche, dadurch gekennzeichnet, daß die Dichtung (11) aus zwei ineinander geführten, gegensinnig geöffneten Hülsen besteht, einer Innenhülse (15) und einer Außenhülse (16), und daß in der Innenhülse (15) eine Dichtungspackung (17, 18) aufgenommen ist.

7. Spritzpistole, insbesondere nach einem oder mehreren der vorhergehenden Ansprüche, dadurch gekennzeichnet, daß die Hülsen (15, 16) federnd gegeneinander abgestützt sind.

8. Spritzpistole, insbesondere nach einem oder mehreren der vorhergehenden Ansprüche, dadurch gekennzeichnet, daß die Innenhülse (15) mit einem äußeren Betätigungsfortsatz (22) ausgebildet ist, der einen Längsschlitz (24) der Außenhülse (16) durchsetzt.

9. Spritzpistole, insbesondere nach einem oder mehreren der vorhergehenden Ansprüche, dadurch gekennzeichnet, daß die Innenhülse (15) oder die Außenhülse (16) in Längsrichtung einen äußeren Halterungsvorsprung (26) ausbildet, zur Aufnahme in einer entsprechend in dem Pistolenkörper (2) ausgebildeten Ausnehmung (26').

FIG. 1

EP 0 447 683 A2

FIG. 2

FIG. 4

FIG. 3

FIG. 5

FIG. 6

FIG. 7

Ansicht A

## FIG. 8

—25

## FIG. 9

24